# EUROPEAN PATENT SPECIFICATION

(11) **EP 2 352 013 B1**
(45) Date of publication and mention of the grant of the patent: **23.01.2013**
(21) Application number: 10000986.9
(22) Date of filing: 01.02.2010
(51) Int. Cl.: G01N 21/958, G01N 21/15

(54) **A vision system and method for a motor vehicle**
Sichtsystem und -verfahren für ein Kraftfahrzeug
Système de vision et procédé pour véhicule à moteur

(43) Date of publication of application: 03.08.2011
(73) Proprietor: Autoliv Development AB, 447 83 Vårgårda (SE)
(72) Inventor: Lundmark, Astrid, 58750 Linköping (SE)
(74) Representative: Müller Verweyen

(56) References cited:
- EP-A2- 1 507 138
- EP-A2- 1 819 167
- US-A1- 2007 272 884

## Description

The invention relates to a vision system for a motor vehicle, comprising an imaging means adapted to record images of a region surrounding the motor vehicle, electronic processing means adapted to process images recorded by said imaging means, and safety means controlled depending on the result of said image processing. Furthermore, the invention relates to a corresponding vision method.

Cameras used in a motor vehicle for recording images of the surrounding are protected against the environment by a transparent front element like a lens or a protective window. The front element is subject to impairment, for example abrasion due to particles in the air, like sand. Such impairment can be determined by visual inspection by the driver or service personnel, which however is time-consuming and not very reliable.

US 2007 011 5357 A1 discloses a vision system with a primary camera mounted behind the windscreen and adapted to record images of a region in front of the motor vehicle, and a secondary camera focusing on the surface of the windscreen for detecting obstructions on said windscreen due to for example rain, condensed moisture or dirt.

EP 1 819 167 A2 discloses an imaging system for a motor vehicle with a variable focus lens. In one mode, the lens can be focused to the vehicle environment in order to detect objects of interest like pedestrians. In another mode, the lens can be focused to the windshield in order to determine the windshield condition or optical quality.

The object of the invention is to provide a cost-effective vision system allowing a reliable detection of an impairment of the transparent front element.

The invention solves this object with the features of the independent claims. The invention has realized that an impairment of the transparent front element can be determined on the basis of image data recorded by the imaging means alone, without need for additional hardware like a secondary camera focused to the front element.

In the case of a thermal imaging system, according to the invention, the impairment determination is based on at least one temperature related value of a region in a recorded image. An impairment of the front element can for example be determined by comparing the temperature related value to an expected value or an expected range of values.

Preferably a temperature of a relatively cold part in a recorded image is used in the impairment determination. Relatively cold means significantly colder than the average temperature of a recorded image, preferably below +10°C, further preferably below the freezing point. Preferably the temperature of the coldest part in a recorded image is used in the impairment determination. This may in particular be the temperature of the clear sky in a recorded image. For example if it is possible at least approximately to estimate absolute temperatures from a recorded image, and the temperature of a clear sky is significantly higher than the expected value, which is for example about -55°C, impairment of the front element may be determined.

Preferably a temperature of a relatively warm part in a recorded image is used in the impairment determination. Relatively warm means significantly warmer than the average temperature of a recorded image, preferably warmer than +30°C, more preferably warmer than +40°C. Preferably the temperature of the warmest part in a recorded image, excluding the sun and/or sunlight reflexes such as on metal sheets, is used in the impairment determination. This may in particular be the temperature of an exhaust pipe of another vehicle. For example if it is possible at least approximately to estimate absolute temperatures from a recorded image and the temperature of the exhaust pipe is significantly below an expected range for average exhaust pipe temperatures, impairment of the front element may be determined. The temperature of other detectable objects may be used instead of or in addition to exhaust pipes. For example, the temperature of pedestrians may preferably be compared to an expected temperature or range of temperatures.

In general, the temperature of one or more objects recognized by the processing means in a recorded image is preferably used in the impairment determination. This is not limited to exhaust pipes of other motor vehicles, but may for example be the head of pedestrians.

Since generally relative temperatures can be determined with much higher accuracy from a recorded image than absolute temperatures, in a preferred embodiment the difference between the temperature of a relatively warm and the temperature of a relatively cold region in a recorded image is used in the impairment determination. This may in particular be the temperature difference between an exhaust pipe or a pedestrian, and the temperature of the clear sky. Alternatively or in addition, the temperature difference between two relatively warm regions, for example an exhaust pipe and a pedestrian, and/or the temperature difference between two relatively cold regions may be used.

In general, the temperature distribution tends to become less spread in the case of impairment of the frontal element, i.e. the relatively warm objects appear colder in the recorded images, and vice versa. Therefore, impairment determination may be based on an evaluation of a value related to the temperature distribution of recorded images. In particular, impairment of the frontal element may be determined if the spread of the temperature distribution in a recorded image, or a value related thereto, falls below a predetermined value.

In another embodiment it is also possible to use different temperature values depending on environmental conditions, which may be determined for example on the basis of signals from other vehicle mounted sensors.

Preferably the level of impairment of the transparent front element is estimated, in addition to or instead of determining whether the front element is impaired or not, only. This allows more precise statements with respect to the state of the frontal element. For example, if the impairment is light it may be signalled to the driver that he can wait until the next service, while if the impairment is heavy, urgent action can be required.

The invention is primarily applicable to determining a permanent impairment of the transparent frontal element, for example due to abrasion or ageing. However, the invention may also be applicable to determining a temporary impairment of the transparent frontal element, for example due to dust, dirt or water.

Preferably the impairment condition is monitored over time, and impairment of the frontal element is determined if the impairment condition is fulfilled for a predetermined period of time. In this manner, the risk of false determination of impairment, which can result for example from a cloudy sky, or driving through regions with low traffic, can be reduced. In another embodiment, impairment determination may take place only at times when pre-determined conditions, evaluated for example on the basis of signals from other sensors, are fulfilled.

In the foregoing, features of the invention have been explained for the preferred case of a thermal imaging system. However, according to an example not forming part of the invention near-infrared imaging means or visual imaging means may be used. More generally, therefore, impairment determination may be based on at least one intensity level and/or at least one wavelength value of a region in a recorded image, or a value related thereto. For example, impairment of the optical element may be determined if the intensity level and/or wavelength value of a region in a recorded image deviates from an expected value.

In particular in the above mentioned example of an optical imaging means in the visual and/or near IR wavelength region, impairment determination may be based on an intensity level in a region of a recorded image, for example an average intensity level, a maximum intensity level or an integrated intensity level. The intensity level may then be compared to an expected level, which for example may be obtained from a vehicle mounted light level sensor. Impairment of the front element may be determined if the intensity level obtained from the recorded images falls below the expected light level by a certain amount. In particular for active systems using a vehicle mounted light source, the intensity level of a recorded image can be compared to an expected value, where an intensity level falling a certain amount below the expected value may indicate an impairment of the front element.

In a further example not forming part of the invention, the impairment determination can be based on a stray light level of a recorded image, or a high (spatial) frequency component level of a recorded image indicating an increased level of blurring.

In the following the invention shall be illustrated on the basis of preferred embodiments with reference to the accompanying drawings, wherein:

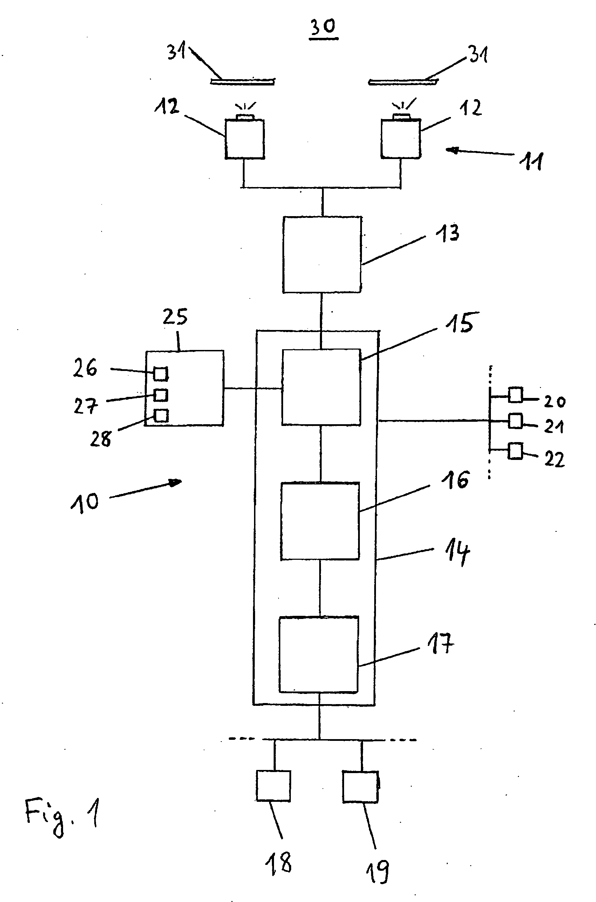

- Fig. 1: shows a schematic illustration of a vehicle mounted vision system; and
- Fig. 2: a schematic view of an image recorded by a vehicle mounted imaging system.

The vehicle mounted vision or safety system 10 comprises an infrared imaging means 11 for recording images of a region surrounding the motor vehicle, for example a region in front of the motor vehicle. Preferably the imaging means 11 comprises one or more infrared imaging devices 12, in particular cameras, where infrared covers near IR with wavelengths below 5 microns and/or far IR with wavelengths beyond 5 microns. Preferably the imaging means 11 comprises a plurality of imaging devices 12 in particular forming a stereo imaging means 11; alternatively only one imaging device forming a mono imaging means can be used. The optics of the imaging means 11 is protected against the environment 30 by one or more transparent front elements 31. The transparent front element 31 may in particular be a separate window element, such as a windscreen of the vehicle, or a front element of the imaging means 11, for example a front lens.

The imaging means 11 is preferably coupled to an image pre-processor 13 adapted to control the capture of images by the imaging means 11, receive the electrical signal containing the image information from the imaging means 11, warp pairs of left/ right images into alignment and/or create disparity images, which per se is known in the art. The image pre-processor 13 may be realized by a dedicated hardware circuit. Alternatively the pre-processor 13, or part of its functions, can be realized in the electronic processing means 14.

The image data is then provided to an electronic processing means 14 where further image and data processing is carried out by corresponding software. In particular, the processing means 14 comprises an object detection means 15 adapted to identify and preferably also classify possible objects in front of the motor vehicle, such as pedestrians, other vehicles, bicyclists or large animals, a tracking means 16 adapted to track over time the position of object candidates in the recorded images identified by the object detection means 15, and a decision means 17 adapted to activate or control vehicle safety means 18, 19, ... depending on the result of the processing in the object detection and tracking means 15, 16. Expediently, the electronic processing means 14 has access to an electronic memory means 25. The vehicle safety means 18, 19, ... may comprise a warning means 18 adapted to provide a collision warning to the driver by suitable optical, acoustical and/or haptical warning signals; display means 19 for displaying information relating to an identified object; one or more restraint systems such as occupant airbags or safety belt tensioners, pedestrian airbags, hood lifters and the like, and/or dynamic vehicle control systems such as brakes.

The electronic processing means 14 is preferably programmed or programmable and may comprise a microprocessor or micro-controller. The image pre-processor 13, the electronic processing means 14 and the memory means 25 are preferably realised in an on-board electronic control unit (ECU) and may be connected to the imaging means 11 via a separate cable or alternatively via a vehicle data bus. In another embodiment the ECU and an imaging device camera 12 can be integrated into a single unit. All steps from imaging, image pre-processing, image processing to activation or control of safety means 18, 19, ... are performed automatically and continuously during driving in real time.

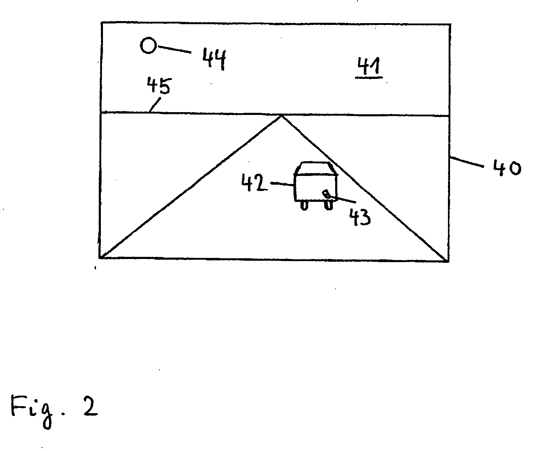

A method of estimating abrasion of the front element 31 of the imaging means 11 is illustrated using Fig. 2 which shows schematic representation of an image 40 recorded by the imaging means 11. In this example it is assumed that the imaging means 11 is a far infrared, i.e. a thermal imaging means, where a value is assigned to each pixel of the image 40 which is related to the temperature of the part of the scene represented by that pixel (in a working range for the detector temperature between for example -10°C and +50°C).

The processing means 14 periodically identifies a region 41 having the lowest temperature in the image 40. In case of clear weather this is usually the clear sky having a temperature significantly below -20°C. The determined lowest temperature is compared to a lowest temperature value stored in a corresponding field 26 in the memory 25. If the current lowest temperature is colder than the value stored in the field 26, the current lowest temperature is registered in the field 26. The region having the lowest temperature, more generally a relatively low temperature, is preferably confirmed by a verification step based on image processing. For example, the lowest temperature may be considered only if it lies above the horizon 45 identified in the image 40, or near the upper edge of the image 40.

The processing means 14 is furthermore adapted to identify the warmest part in the image 40, apart of course from the sun 44 which normally causes an overflow and therefore can easily be ruled out. The warmest part 43 in the image 40 is usually an exhaust pipe of another motor vehicle 42 if such other vehicle is present in front of the vehicle.

The region having the highest temperature, or more generally a relatively high temperature, may be confirmed by a verification step based on image processing. For example, the highest temperature in the image 40 may be considered only if the object identification means has detected the corresponding part of the image 40 and classified it as belonging to an exhaust pipe.

The highest determined temperature is compared to a highest temperature value stored in a corresponding field 27 in the memory 25. If the current highest temperature is higher than the value stored in the field 26, the following processing is carried out.

The temperature difference between the warmest part 43 of the image 40 and the coldest part 41, taken from the memory field 26, is compared to a certain threshold chosen to be characteristic of the temperature difference between the clear sky and the reference object, here the exhaust pipe. If the absolute difference exceeds the threshold, the processing means 14 determines that the front element 31 is not abraded or otherwise impaired. In this case, the memory fields 26, 27 are re-set to an average temperature value, for example +20°C, and a timer 28 is re-set to zero. The threshold for the temperature difference preferably is at least 60°C, more preferably at least 80°C, still more preferably at least 100°C.

If the temperature difference does not exceed the threshold, the determined highest temperature in the image 40 is registered in the data field 27 as the new highest temperature.

If the timer 28 exceeds a predetermined value, indicating that an intact unimpaired front element 31 has not been determined for a sufficiently long time, the processing means 14 may determine that front element 31 is abraded or otherwise impaired. This may be indicated to the driver for example via a corresponding visual indicator, in order to cause him to visit a service garage. Alternatively or in addition, an impairment indicating error code may be set in an electronic control unit for service personnel.

The level of abrasion may be determined for example on the basis of the temperature difference between the values in the data fields 26 and 27, where a smaller temperature difference indicates higher abrasion or impairment.

The time period set to indicate abrasion or impairment may be several hours, days, weeks or months. In one embodiment, the timer 28 may be incremented for example only during driving.

Instead of or in addition to exhaust pipes, the temperature of other objects recognized in the image 40, for example the temperature of pedestrian's heads, may be used in the impairment determination.

The impairment determination process may be depending in one way or another on conditions evaluated on the basis of signals from other vehicle-mounted sensors like lightness sensor 20, rain sensor 21, wiper activity sensor 22 or the like.

## Claims

1. A vision system for a motor vehicle, comprising an infrared imaging means (11) adapted to record images of a region surrounding the motor vehicle, electronic processing means (14) adapted to process images recorded by said imaging means (11), and safety means (18, 19) controlled depending on the result of said image processing, wherein said electronic processing means (14) is adapted to determine, on the basis of image data recorded by said imaging means (11), an impairment of a transparent front element (31) protecting said imaging means (11), **characterized in that** said electronic processing means (14) is adapted to use at least one temperature related value of a region in a recorded image (40) of the surrounding of the motor vehicle in the impairment determination.

2. The vision system according to claim 1, wherein said electronic processing means (14) is adapted to determine impairment of the front element (31) if the temperature of said region deviates from an expected value.

3. The vision system according to any one of the preceding claims, wherein said electronic processing means (14) is adapted to use the temperature of a relatively cold region in a recorded image (40) in the impairment determination.

4. The vision system according to any one of the preceding claims, wherein said electronic processing means (14) is adapted to use the temperature of the coldest region (41) in a recorded image (40) in the impairment determination.

5. The vision system according to any one of the preceding claims, wherein said electronic processing means (14) is adapted to use the temperature of a relatively warm region in a recorded image (40) in the impairment determination.

6. The vision system according to any one of the preceding claims, wherein said electronic processing means (14) is adapted to used the temperature of the warmest region (43) in a recorded image (40), apart from the sun (44) and/or sunlight reflexes, in the impairment determination.

7. The vision system according to any one of the preceding claims, wherein said electronic processing means (14) is adapted to use a temperature of an object (42) and/or part (43) of an object (42) recognized in an object recognition means (15) of the processing means (14) in the impairment determination.

8. The vision system according to any one of the preceding claims, wherein said electronic processing means (14) is adapted to determine impairment of the front element (31) if the difference between the temperature of a relatively warm part and the temperature of a relatively cold part in a recorded image falls below a certain threshold.

9. The vision system according to any one of the proceeding claims, wherein said electronic processing means (14) is adapted to estimate the level of impairment of the front element (31).

10. The vision system according to any one of the proceeding claims, wherein said electronic processing means (14) is adapted to determine impairment of the front element (31) if an impairment condition is fulfilled for a predetermined period of time.

11. A vision method for a motor vehicle, comprising recording images of a region surrounding the motor vehicle, processing said recorded images, controlling safety means depending on the result of said image processing, and determining, on the basis of the recorded image data, an impairment of a transparent front element protecting said imaging means, **characterized by** using at least one temperature related value of a region in a recorded image of the surrounding of the motor vehicle in the impairment determination.

## Patentansprüche

1. Ein Sichtsystem für ein Kraftfahrzeug, umfassend eine infrarot-bildgebende Einrichtung (11), die dazu eingerichtet ist, Bilder eines das Kraftfahrzeug umgebenden Bereiches aufzunehmen, eine elektronische Verarbeitungseinrichtung (14), die dazu eingerichtet ist, von der bildgebenden Einrichtung (11) aufgenommene Bilder zu verarbeiten, und in Abhängigkeit von dem Ergebnis der Bildverarbeitung gesteuerte Sicherheitseinrichtungen (18, 19), wobei die elektronische Verarbeitungseinrichtung (14) dazu eingerichtet ist, basierend auf von der bildgebenden Einrichtung (11) aufgenommenen Bilddaten eine Beeinträchtigung eines die bildgebende Einrichtung (11) schützenden transparenten Frontelements (31) festzustellen, **dadurch gekennzeichnet, dass** die elektronische Verarbeitungseinrichtung (14) dazu eingerichtet ist, bei der Beeinträchtigungsfeststellung mindestens einen temperaturbezogenen Wert eines Bereiches in einem aufgenommenen Bild (40) der Umgebung des Kraftfahrzeugs zu verwenden.

2. Das Sichtsystem nach Anspruch 1, wobei die elektronische Verarbeitungseinrichtung (14) dazu eingerichtet ist, eine Beeinträchtigung des Frontelements (31) festzustellen, wenn die Temperatur dieses Bereiches von einem erwarteten Wert abweicht.

3. Das Sichtsystem nach einem der vorhergehenden Ansprüche, wobei die elektronische Verarbeitungseinrichtung (14) dazu eingerichtet ist, bei der Beeinträchtigungsfeststellung die Temperatur eines relativ kalten Bereiches in einem aufgenommenen Bild (40) zu verwenden.

4. Das Sichtsystem nach einem der vorhergehenden Ansprüche, wobei die elektronische Verarbeitungseinrichtung (14) dazu eingerichtet ist, bei der Beeinträchtigungsfeststellung die Temperatur des kältesten Bereiches (41) in einem aufgenommenen Bild (40) zu verwenden.

5. Das Sichtsystem nach einem der vorhergehenden Ansprüche, wobei die elektronische Verarbeitungseinrichtung (14) dazu eingerichtet ist, bei der Beeinträchtigungsfeststellung die Temperatur eines relativ warmen Bereiches in einem aufgenommenen Bild (40) zu verwenden.

6. Das Sichtsystem nach einem der vorhergehenden Ansprüche, wobei die elektronische Verarbeitungseinrichtung (14) dazu eingerichtet ist, bei der Beeinträchtigungsfeststellung die Temperatur des wärmsten Bereiches (43) in einem aufgenommenen Bild (40), außer der Sonne (44) und/oder Sonnenlichtspiegelungen, zu verwenden.

7. Das Sichtsystem nach einem der vorhergehenden Ansprüche, wobei die elektronische Verarbeitungseinrichtung (14) dazu eingerichtet ist, bei der Beeinträchtigungsfeststellung eine Temperatur eines in einer Objekterkennungseinrichtung (15) der Verarbeitungseinrichtung (14) erkannten Objektes (42) und/oder Teil (43) eines Objektes (42) zu verwenden.

8. Das Sichtsystem nach einem der vorhergehenden Ansprüche, wobei die elektronische Verarbeitungseinrichtung (14) dazu eingerichtet ist, eine Beeinträchtigung des Frontelements (31) festzustellen, wenn der Unterschied zwischen der Temperatur eines relativ warmen Teils und der Temperatur eines relativ kalten Teils in einem aufgenommenen Bild unter einen bestimmten Grenzwert fällt.

9. Das Sichtsystem nach einem der vorhergehenden Ansprüche, wobei die elektronische Verarbeitungseinrichtung (14) dazu eingerichtet ist, den Grad der Beeinträchtigung des Frontelements (31) zu beurteilen.

10. Das Sichtsystem nach einem der vorhergehenden Ansprüche, wobei die elektronische Verarbeitungseinrichtung (14) dazu eingerichtet ist, eine Beeinträchtigung des Frontelements (31) festzustellen, wenn eine Beeinträchtigungsbedingung über einen vorgegebenen Zeitraum erfüllt ist.

11. Ein Sichtverfahren für ein Kraftfahrzeug, umfassend Aufnehmen von Bildern eines das Kraftfahrzeug umgebenden Bereiches, Verarbeiten der aufgenommenen Bilder, Steuern von Sicherheitseinrichtungen in Abhängigkeit von dem Ergebnis der Bildverarbeitung, und Feststellen einer Beeinträchtigung eines die bildgebende Einrichtung schützenden transparenten Frontelements basierend auf den aufgenommenen Bilddaten, **dadurch gekennzeichnet, dass** bei der Beeinträchtigungsfeststellung mindestens ein temperaturbezogener Wert eines Bereiches in einem aufgenommenen Bild der Umgebung des Kraftfahrzeugs verwendet wird.

## Revendications

1. Un système de vision pour un véhicule automobile, comprenant un moyen d'imagerie infrarouge (11) adapté pour enregistrer des images d'une région qui entoure le véhicule automobile, un moyen de traitement électronique (14) adapté pour traiter des images enregistrées par ledit moyen d'imagerie (11), et des moyens de sécurité (18, 19) commandé en fonction du résultat dudit traitement d'image, dans lequel ledit moyen de traitement électronique (14) est adapté pour déterminer, sur la base de données d'images enregistrées par ledit moyen d'imagerie (11), une dégradation d'un élément avant transparent (31) protégeant ledit moyen d'imagerie (11), **caractérisé en ce que** ledit moyen de traitement électronique (14) est adapté pour utiliser au moins une valeur liée à la température d'une région dans une image enregistrée (40) de l'environnement du véhicule automobile lors de la détermination d'une dégradation.

2. Le système de vision selon la revendication 1, dans lequel ledit moyen de traitement électronique (14) est adapté pour déterminer la dégradation de l'élément avant (31) si la température de ladite région s'écarte d'une valeur attendue.

3. Le système de vision selon l'une quelconque des revendications précédentes, dans lequel ledit moyen de traitement électronique (14) est adapté pour utiliser la température d'une région relativement froide dans une image enregistrée (40) lors de la détermination d'une dégradation.

4. Le système de vision selon l'une quelconque des revendications précédentes, dans lequel ledit moyen de traitement électronique (14) est adapté pour utiliser la température de la région (41) la plus froide dans une image enregistrée (40) lors de la détermination d'une dégradation.

5. Le système de vision selon l'une quelconque des revendications précédentes, dans lequel ledit moyen de traitement électronique (14) est adapté pour utiliser la température d'une région relativement chaude dans une image enregistrée (40) lors de la détermination d'une dégradation.

6. Le système de vision selon l'une quelconque des revendications précédentes, dans lequel ledit moyen de traitement électronique (14) est adapté pour utiliser la température de la région (43) la plus chaude dans une image enregistrée (40), mis à part le soleil (44) et/ou des réflexions de la lumière du soleil, lors de la détermination d'une dégradation.

7. Le système de vision selon l'une quelconque des revendications précédentes, dans lequel ledit moyen de traitement électronique (14) est adapté pour utiliser une température d'un objet (42) et/ou d'une partie (43) d'un objet (42) reconnu dans un moyen de reconnaissance d'objet (15) du moyen de traitement (14) lors de la détermination d'une dégradation.

8. Le système de vision selon l'une quelconque des revendications précédentes, dans lequel ledit moyen de traitement électronique (14) est adapté pour déterminer une dégradation de l'élément avant (31) si la différence entre la température d'une partie relativement chaude et la température d'une partie relativement froide dans une image enregistrée est inférieure à un certain seuil.

9. Le système de vision selon l'une quelconque des revendications précédentes, dans lequel ledit moyen de traitement électronique (14) est adapté pour estimer le niveau de dégradation de l'élément avant (31).

10. Le système de vision selon l'une quelconque des revendications précédentes, dans lequel ledit moyen de traitement électronique (14) est adapté pour déterminer une dégradation de l'élément avant (31) si une condition de dégradation est remplie pendant une période de temps prédéterminée.

11. Un procédé de vision pour un véhicule automobile, consistant à enregistrer des images d'une région qui entoure le véhicule automobile, traiter lesdites images enregistrées, commander des moyens de sécurité en fonction du résultat dudit traitement d'image, et déterminer, sur la base des données d'images enregistrées, une dégradation d'un élément avant transparent protégeant ledit moyen d'imagerie, **caractérisé par** le fait d'utiliser au moins une valeur liée à la température d'une région dans une image enregistrée de l'environnement du véhicule automobile lors de la détermination d'une dégradation.
